# EUROPEAN PATENT SPECIFICATION

(11) **EP 1 210 397 B1**
(45) Date of publication and mention of the grant of the patent: **18.02.2004**
(21) Application number: 00959975.4
(22) Date of filing: 07.09.2000
(51) Int. Cl.: C09K 5/00, C23F 11/00, C23F 11/06

(54) **CORROSION INHIBITING SOLUTIONS FOR ABSORPTION SYSTEMS**
KORROSIONSINHIBIERENDE LÖSUNGEN FÜR ABSORPTIONSSYSTEME
SOLUTIONS ANTICORROSION DESTINEES A DES SYSTEMES A ABSORPTION

(30) Priority: 07.09.1999 US 153110 P
(43) Date of publication of application: 05.06.2002
(60) Divisional application: 03010754.4
(73) Proprietor: FMC CORPORATION, Philadelphia, PA 19103 (US)
(72) Inventor: VERMA, Shyam, Kumar, Gastonia, NC 28054 (US); SANDOR, George, Robert, Gastonia, NC 28056 (US)
(74) Representative: Naumann, Ulrich, Dr.-Ing.
(86) International application number: PCT/US2000/024527
(87) International publication number: WO 2001/018146

(56) References cited:
- WO-A-97/49842
- WO-A-98/03608
- US-A- 4 743 393
- US-A- 4 963 290
- US-A- 5 547 600
- US-A- 6 004 475
- PIKEL'NYI A Y ET AL: "THE KINETICS AND MECHANISM OF CORROSION IN THE PRESENCE OF HETEROPOLYCOMPOUNDS" PROTECTION OF METALS,US,PLENUM PUBLISHING CO, NEW YORK, vol. 30, no. 4, 1 July 1994 (1994-07-01), pages 385-386, XP000466629 ISSN: 0033-1732
- LOMAKINA S V ET AL: "HETEROPOLY ANIONS AS CORROSION INHIBITORS FOR ALUMINIUM IN HIGH TEMPERATURE WATER" WERKSTOFFE UND KORROSION,DE,VERLAG CHEMIE GMBM. WEINHEIM, vol. 46, no. 7, 1 July 1995 (1995-07-01), page R111 XP000517821 ISSN: 0947-5117
- DATABASE WPI Section Ch, Week 199926 Derwent Publications Ltd., London, GB; Class E31, AN 1999-308411 XP002154821 & JP 11 106750 A (FMC CORP), 20 April 1999 (1999-04-20)

## Description

This invention relates generally to corrosion inhibiting solutions, and in particular to corrosion inhibiting absorption solutions which include corrosion inhibiting agents.

### BACKGROUND OF THE INVENTION

Aqueous solutions of ammonia are useful as absorbent fluids in a variety of systems, such as absorption refrigeration machines, air conditioning systems, absorption heat pumps, reactifiers. Many of these systems also include heat exchangers. These systems typically operate under anaerobic conditions at temperatures of up to 450°F. Typically such solutions include ammonia in an amount ranging from about 1 to about 50 weight percent, based on the total weight of the solution.

Aqueous solutions of alkali metal and/or alkaline earth metal hydroxides, such as solutions of calcium hydroxide, potassium hydroxide, cesium hydroxide and mixtures thereof, are also used in absorbent fluids, for example in absorption cooling machines, chillers, and heat pumps. Typically such solutions include alkali metal and/or alkaline earth metal hydroxide in an amount ranging from about 20 to about 80 weight percent, based on the total weight of the solution.

Although these and other types of absorption solutions can be advantageous, aqueous ammonia, alkali metal hydroxides and/or alkaline earth metal hydroxides can be corrosive toward the materials used to construct the machines. Such materials can include mild and stainless steel for containment components and copper or copper-nickel alloys for tube bundles (typically for machines in which alkali metal hydroxide and/or alkaline earth metal hydroxide solutions are used), among others.

In addition to the surface damage caused by corrosion, the corrosion reaction evolves hydrogen gas as a byproduct. Incondensibles in the form of atoms or ions can easily enter and diffuse into metals, resulting in the degradation of their mechanical properties under certain conditions.

The severity of corrosion can vary depending upon factors such as temperatures of the system, concentration of ammonia, alkali metal hydroxide and/or alkaline earth metal hydroxide in the absorption solution, metals used in the construction of the unit, the presence of air. For example, during use, the internal temperature of such machines can be high, typically up to about 450°F and higher, depending on the type of the absorption cycle, which can increase the corrosive effect of the solution. As noted above, corrosion can generate significant amounts of hydrogen during machine operation, which can adversely impact the performance of the machine.

Various additives, such as lithium chromate, lithium nitrate, and lithium molybdate, have been proposed as corrosion inhibitors in absorption solutions. However, lithium chromate can raise environmental concerns, and its use is being phased out. Further, the level of chromate and its oxidation state must be carefully maintained. Chromate acts as an oxidant. Thus typically large quantities of chromate are added initially and must be replaced periodically to maintain the desired level of corrosion inhibition. If too little chromate is used, then it does not properly passivate the whole metal surface and pitting can result.

Lithium nitrate can potentially evolve ammonia, which can cause stress corrosion cracking of copper based alloys such as heat exchanger tubes. Lithium molybdate exhibits only limited solubility in ammonium, alkali metal hydroxide and/or alkaline earth metal hydroxide solutions. In addition, lithium molybdate is metastable in aqueous ammonium, alkali metal hydroxide, and/or alkaline earth metal hydroxide solutions. Thus it can be difficult to maintain in aqueous ammonia, alkali metal hydroxide, and/or alkaline earth metal hydroxide solutions and to maintain a constant concentration of molybdate ions in solution.

U.S. Patent No. 5,342,578 reports the use of silicon compounds, in particular sodium silicate, as inhibitors for aqueous ammonium solutions. However, at a certain critical ammonium concentration, the effectiveness of such silicon compounds is diminished. Further, such silicon compounds can have limited solubility in an aqueous medium.

Pending U.S. Patent Application 08/882,771, filed June 26, 1997, titled "Corrosion Inhibiting Solutions for Refrigeration Systems," is directed to the use of heteropoly complex anions of transitional elements as corrosion inhibition additives. Refrigeration absorption formulations which included heteropoly complex anions as a component exhibited improved corrosion inhibition properties and low generation of hydrogen gas that is evolved due to the corrosion reaction of alkali halide solutions with the materials of construction of the refrigeration machine. Pending U.S. Patent Application Serial No. 08/896,110, filed July 17, 1997, titled "Corrosion Inhibiting Solutions for Refrigeration Systems," is directed to the use of halide compounds of metallic elements of group Va, and demonstrated that alkali halide formulations containing these elements offer improved corrosion protection and low hydrogen as compared to conventional corrosion inhibitors.

### SUMMARY OF THE INVENTION

The present invention provides aqueous ammonia solutions which are useful as absorption fluids for absorption machines. In one aspect of this embodiment of the invention, the solutions include at least one salt of a metallic element of Group Va of the Periodic Table of Elements, such as a halide or oxide thereof, and preferably antimony bromide (SbBr₃), as a corrosion inhibition additive.

Another embodiment of the invention provides alkali metal and/or alkaline earth metal hydroxide solutions, such as solutions of lithium hydroxide, calcium hydroxide, potassium hydroxide, sodium hydroxide, cesium hydroxide and mixtures thereof, which are useful as absorption fluids for absorption machines. In yet another aspect of this embodiment of the invention, the solutions include at least one salt of a metallic element of Group Va of the Periodic Table of Elements, such as a halide or oxide thereof, and preferably antimony halide, as a corrosion inhibition additive.

The compositions of the invention containing the above noted corrosion inhibitors provide improved corrosion.protection for the materials of construction of the absorption machine. The formulations of this invention which contain the noted additives can also provide stable formulations, thereby providing aqueous ammonia, alkali metal hydroxide and/or alkaline earth metal hydroxide solutions having a sufficient concentration of the desired corrosion inhibiting agent In addition, the solutions can reduce hydrogen generation and thus enhance performance of the absorption machines, due to reduced accumulation of non-condensable gas in the absorber. Still further, use of the absorption solutions in an absorption machine can result in a protective layer containing magnetite (iron oxide) formed on carbon steel. The inventors have found that protective layer which forms as a result of using the solutions of the invention can be more corrosion resistant than oxide layer formed in the presence of conventional corrosion inhibitors, such as lithium molybdate, in which magnetite film tends to be more amorphous and less developed. The solutions are useful in any of the types of absorption machines known in the art, such as absorption refrigeration machines, chillers, air conditioning systems, heat exchangers, heat pump systems.

The present invention also provides processes for inhibiting corrosion of absorption machines, such as refrigeration machines, using the absorption solutions of the invention.

### DETAILED DESCRIPTION OF THE PREFERRED EMBODIMENTS

The present invention will be described more fully hereinafter in connection with illustrative embodiments of the invention which are given so that the present disclosure will be thorough and complete and will fully convey the scope of the invention to those skilled in the art. However, it is to be understood that this invention may be embodied in many different forms and should not be construed as being limited to the specific embodiments described and illustrated herein. Although specific terms are used in the following description, these terms are merely for purposes of illustration and are not intended to define or limit the scope of the invention.

Transition metal compounds or salts useful in the invention are selected from compounds of transition metals which are capable of providing the transition metal element as ions in aqueous ammonia solution for complexing with the chosen heteropoly anion. The transition metal element of the transition metal compound can be the same or different from the transition metal of the heteropoly anion complex. Exemplary transition metal compounds or salts include nitrates, halides, oxides, preferably a halide, of the transition metal elements such as cobalt, nickel, tungsten, zirconium, manganese, chromium, and mixtures thereof.

The compounds or salts of the metallic elements of Groups IIIa to VIa of the Periodic Table of Elements are also selected from compounds which are capable of providing the metallic elements of Group IIIa to VIa as ions in ammonium solutions. Exemplary compounds or salts of the metallic elements of Groups IIIa to VIa include oxides, sulfides, halides, nitrates, preferably a halide, of metallic elements of Group IIIa to VIa, such as antimony, germanium. For example, the above-referenced U.S. Patent Application Serial No. 08/896,110, filed July 17, 1997, describes halides of metallic elements of Group Va of the Periodic Table of Elements which can be useful in the invention, although other compounds can also be useful in this invention. Exemplary halides of Group Va metallic elements (i.e., arsenic, antimony, and bismuth) include antimony bromide, arsenic bromide, and bismuth bromide and mixtures thereof.

Salts of the Group Va metallic elements (i.e., arsenic, antimony, and bismuth) can include, for example, oxides and halides, such as bromide, chloride, or iodide, and preferably is bromide. Exemplary halides of Group Va metallic elements useful as corrosion inhibiting agents in the absorption solutions of the invention include antimony bromide (SbBr₃), arsenic bromide, and bismuth bromide and mixtures thereof. These Group Va metallic elements as ions in solution can exhibit corrosion inhibiting properties in absorption refrigeration systems.

The salts of Group Va metallic elements are present in the compositions of the invention in amounts sufficient to provide the desired corrosion inhibiting effect. This amount can vary depending upon various factors, such as the solubility of the compounds in the absorption solution, the nature of the ions, temperatures in the machine, concentration of ammonia in aqueous solution, alkali metal hydroxides and/or alkaline metal hydroxides in solution, metals used in the construction of the unit, the presence of air. Salts of metallic elements of Group Va can be present in an amount ranging from about 10 parts per million (ppm) to about 5000 ppm, and preferably from about 150 ppm to about 400 ppm. The corrosion inhibiting agents can also be useful in amounts outside of these ranges, so long as the agent is present in an amount sufficient to provide corrosion inhibition properties.

The aqueous ammonium absorption solution can include ammonia in conventional amounts. An exemplary solution includes ammonia in an amount from about 1 to about 50 weight percent, preferably about 5 to about 50 weight percent, based on the total weight of the solution, although as the skilled artisan will appreciate, amounts outside of this range can be used as well.

The alkali metal hydroxide and/or alkaline earth metal hydroxide absorption solutions can include alkali metal hydroxides, alkaline earth metal hydroxides and mixtures of alkali metal hydroxides and alkaline earth metal hydroxides in conventional amounts. An exemplary alkali metal and/or alkaline earth metal hydroxide absorption solution includes alkali metal and/or alkaline earth metal hydroxide in an amount from about 20 to about 80 weight percent, preferably about 10 to about 70 weight percent, based on the total weight of the solution, although as the skilled artisan will appreciate, amounts outside of this range can be used as well. The alkali metal and/or alkaline earth metal hydroxide can be, for example, calcium hydroxide, potassium hydroxide, cesium hydroxide and mixtures thereof.

Further, the absorption solution can include lithium nitrate, molybdate and/or chromate in conventional amounts. Still further, the absorption solution can include halides, such as zinc halides, which can be particularly useful in high temperature applications (generally about 450°F and higher). The zinc halides can be present in amounts up to about 50 weight percent

The present invention also provides processes for inhibiting the corrosion of an absorption machine (such as a refrigeration machines) resulting from the presence of aqueous ammonium, alkali metal hydroxide and/or alkaline earth metal hydroxide absorbent solutions. In the process of the invention, the above described aqueous ammonia, alkali metal hydroxide and/or alkaline earth metal hydroxide solutions which include at least a halide of a metallic element of Group Va of the Periodic Table of Elements is circulated in an absorption machine under conditions and in amounts sufficient to provide a corrosion inhibiting effect. As the skilled artisan will appreciate, the environment or conditions, such as temperature and/or pressure, of different refrigeration machines can vary. Typically, the temperature of the machine can be as high as 550°F, and higher. The solutions are particularly advantageous for high temperature applications.

The present invention will be further illustrated by the following nonlimiting examples.

### Example

Aqueous ammonium solutions (3%) having different corrosion inhibitors were prepared. Sodium chromate was the corrosion inhibitor in one solution. Sodium chromate is a corrosion inhibitor conventionally used in such machines. Solutions including the heteropoly complex anion phosphomolybdic acid (PMA) and this complex in combination with an antimony halide were also prepared.

The solutions were tested to determine the effectiveness of the corrosion inhibitors. Specifically tests were performed in a pressure vessel autoclave with temperature control of (+/- 2°F). The solutions used in the tests were prepared as 3% ammonia concentration. The alkalinity of the solutions was adjusted with lithium hydroxide to control the solution pH at a level that optimized the performance of each chemical or generally accepted in the industry.

Pre-weighed metal coupons of C1018 carbon steel were placed in and above the solution contained in a 2 liter cylinder made of inconel-600 material which fits into the furnace. In order to eliminate the air from the headspace, the cylinder containing the solution was evacuated using a vacuum pump prior to starting the test The solution was heated to 400°F and held at this temperature for a period of 168 hours.

Upon completion, the test coupons were removed and cleaned by ASTM method G1-90. The corrosion rate was calculated from the weight loss. The level of hydrogen generated during the test was also determined at the end of each test The results are set forth in Table 1 below.

**Table 1**

| Corrosion rate of carbon steel in aqua-ammonia solution (3% ammonia solution) at 400°F in one week. | | | | |
|---|---|---|---|---|
| Additive | Corrosion rate (mils per year) for carbon steel in | | Hydrogen generated mg/in²/week | Surface evaluation |
| | Liquid | Vapor | | |
| Sodium chromate (2000 ppm) | 2.08 | 3.16 | 0.99 | Crevice and pitting corrosion in liquid or vapor |
| PMA (300 ppm) | 2.00 | 2.77 | 0.48 | No crevice or pitting corrosion. Excellent protection in liquid and vapor |
| PMA/Sb complex (400 ppm) | 0.25 | 0.20 | 0.93 | No crevice or pitting corrosion. Excellent protection in liquid and vapor |

As the data illustrates, the corrosion inhibitors resulted in excellent corrosion protection since the coupons from these tests showed no crevice and pitting corrosion. On the other hand, coupons from the chromate inhibited solution showed crevice and pitting corrosion. Also, the corrosion rate and hydrogen levels observed for the chromate inhibited solution were higher.

Specifically, in the presence of chromate inhibitor, the hydrogen level is 0.99 mg/in²/week. Compared to sodium chromate, PMA corrosion inhibitor showed significant lowering of hydrogen generation and a small decrease in corrosion rate. The hydrogen level was reduced by almost 50 percent. The coupons exposed to solution containing PMA inhibitor showed excellent protection due to formation of a stable film. No crevice or pitting corrosion was observed.

When the PMA/antimony complex was used, corrosion rate was significantly diminished. The coupons showed a protective film formation. No crevice or pitting corrosion was observed. With this complex a lesser reduction in hydrogen was observed as compared to PMA alone.

Many modifications and other embodiments of the invention will come to mind to one skilled in the art to which this invention pertains having the benefit of the teachings presented in the foregoing descriptions.

## Claims

1. An absorption solution for refrigeration systems, comprising aqueous ammonia and at least one halide of a Group Va metallic element in an amount sufficient to provide a corrosion inhibiting effect.

2. The solution of Claim 1, wherein said at least one halide of a Group Va metallic element comprises antimony bromide (SbBr₃).

3. The solution of Claim 1, wherein said at least one Group Va metallic element is present as halide in an amount of about 10 ppm to about 3000 ppm.

4. A process for inhibiting the corrosion of a machine resulting from the presence of aqueous ammonium absorbent solutions, comprising circulating in a machine an absorption solution comprising ammonium and at least one halide of a Group Va metallic element in an amount sufficient to provide a corrosion inhibiting effect.

5. An absorption solution for refrigeration systems, comprising at least one alkali metal hydroxide, alkaline earth metal hydroxide, or a mixture thereof and at least one halide of a Group Va metallic element in an amount sufficient to provide a corrosion inhibiting effect

6. The solution of Claim 5, wherein said at least one halide of a Group Va metallic element comprises antimony bromide (SbBr₃).

7. The solution of Claim 5, wherein said at least one Group Va metallic element is present as halide in an amount of about 10 ppm to about 3000 ppm.

8. A process for inhibiting the corrosion of a machine resulting from the presence of alkali metal hydroxide, alkaline earth metal hydroxide, or a mixture thereof absorbent solutions, comprising circulating in a machine an absorption solution comprising at least one alkali metal hydroxide, alkaline earth metal hydroxide, or a mixture thereof and at least one halide of a Group Va metallic element in an amount sufficient to provide a corrosion inhibiting effect

## Patentansprüche

1. Eine Absorptionslösung für Kühlsysteme, die wässriges Ammoniak aufweist und die mindestens ein Halogenid eines metallischen Elements der Gruppe Va in einer ausreichenden Menge aufweist, um einen korrosionshemmenden Effekt bereitzustellen.

2. Die Lösung nach Anspruch 1, wobei das mindestens eine Halogenid eines metallischen Elements der Gruppe Va Antimonbromid (SbBr₃) aufweist.

3. Die Lösung nach Anspruch 1, wobei das mindestens eine metallische Element der Gruppe Va als Halogenid in einer Menge von etwa 10 ppm bis etwa 3000 ppm vorliegt.

4. Ein Verfahren zum Hemmen der Korrosion einer Maschine, die aus der Anwesenheit von absorbierenden, wässrigen Ammoniumlösungen resultiert, das das Zirkulieren einer Absorptionslösung in einer Maschine aufweist, wobei die Absorptionslösung Ammonium aufweist und mindestens ein Halogenid eines metallischen Elements der Gruppe Va in einer ausreichenden Menge aufweist, um einen korrosionshemmenden Effekt bereitzustellen.

5. Eine Absorptionslösung für Kühlsysteme, die mindestens ein Alkalimetallhydroxid, Erdalkalimetallhydroxid oder eine Mischung hiervon aufweist und die mindestens ein Halogenid eines metallischen Elements der Gruppe Va in einer ausreichenden Menge aufweist, um einen korrosionshemmenden Effekt bereitzustellen.

6. Die Lösung nach Anspruch 5, wobei das mindestens eine Halogenid eines metallischen Elements der Gruppe Va Antimonbromid (SbBr₃) aufweist.

7. Die Lösung nach Anspruch 5, wobei das mindestens eine metallische Element der Gruppe Va als Halogenid in einer Menge von etwa 10 ppm bis etwa 3000 ppm vorliegt.

8. Ein Verfahren zum Hemmen der Korrosion einer Maschine, die aus der Anwesenheit von absorbierenden Lösungen von Alkalimetallhydroxid, Erdalkalimetallhydroxid oder einer Mischung hiervon resultiert, das das Zirkulieren einer Absorptionslösung in einer Maschine aufweist, wobei die Absorptionslösung mindestens ein Alkalimetallhydroxid, Erdalkalimetallhydroxid oder eine Mischung hiervon aufweist und mindestens ein Halogenid eines metallischen Elements der Gruppe Va in einer ausreichenden Menge aufweist, um einen korrosionshemmenden Effekt bereitzustellen.

## Revendications

1. Une solution d'absorption pour des systèmes de réfrigération comprenant de l'ammoniaque aqueux et au moins un halogénure d'un élément métallique du groupe Va en quantité suffisante pour fournir un effet d'inhibition de la corrosion.

2. La solution de la revendication 1, dans laquelle ledit au moins un halogénure d'un élément métallique du groupe Va comprend du bromure d'antimoine (SbBr₃).

3. La solution de la revendication 1, dans laquelle ledit au moins un halogénure d'un élément métallique du groupe Va est présent sous forme d'halogénure en quantité d'environ 10 ppm à environ 3000 ppm.

4. Un procédé pour inhiber la corrosion d'une machine résultant de la présence de solutions aqueuses absorbant l'ammonium, comprenant la mise en circulation dans une machine d'une solution d'absorption comprenant de l'ammonium et au moins un halogénure d'un élément métallique du groupe Va en quantité suffisante pour fournir un effet d'inhibition de la corrosion.

5. Une solution d'absorption pour des systèmes de réfrigération comprenant un hydroxyde d'un métal alcalin, un hydroxyde d'un métal alcalino-terreux ou un mélange de ceux-ci et au moins un halogénure d'un élément métallique du groupe Va en quantité suffisante pour fournir un effet d'inhibition de la corrosion.

6. La solution de la revendication 5, dans laquelle ledit au moins un halogénure d'un élément métallique du groupe Va comprend du bromure d'antimoine (SbBr₃).

7. La solution de la revendication 5, dans laquelle ledit au moins un halogénure d'un élément métallique du groupe Va est présent sous forme d'halogénure en quantité d'environ 10 ppm à environ 3000 ppm.

8. Un procédé d'inhibition de la corrosion d'un machine résultant de la présence d'un hydroxyde d'un métal alcalin, d'un hydroxyde d'un métal alcalino-terreux ou d'un mélange de ceux-ci, comprenant la mise en circulation dans une machine d'une solution d'absorption comprenant au moins un hydroxyde d'un métal alcalin, un hydroxyde d'un métal alcaline-terreux, ou un mélange de ceux-ci, et au moins un halogénure d'un élément métallique du groupe Va en quantité suffisante pour fournir un effet d'inhibition de la corrosion.
